# FASCICULE DE BREVET EUROPEEN

(11) **EP 2 028 668 B1**
(45) Date de publication et mention de la délivrance du brevet: **02.01.2013**
(21) Numéro de dépôt: 08162356.3
(22) Date de dépôt: 14.08.2008
(51) Int. Cl.: H01G 9/20

(54) **Cellule photovoltaïque à electrolytes non miscibles**
Photovoltaikzelle mit nicht-mischbaren Elektrolyten
Photovoltaic cell with immiscible electrolytes

(30) Priorité: 23.08.2007 FR 0757139
(43) Date de publication de la demande: 25.02.2009
(73) Titulaire: Commissariat à l'Énergie Atomique et aux Énergies Alternatives, 75015 Paris (FR)
(72) Inventeur: Fusalba, Florence, 38000 GRENOBLE (FR); Remiat, Bruno, 38000 GRENOBLE (FR)
(74) Mandataire: Ilgart, Jean-Christophe

(56) Documents cités:
- LV-B- 12 930
- KOTOV N A ET AL: "Photoelectrochemical effect at the interface of immiscible electrolyte solutions" J ELECTROANAL CHEM INTERFACIAL ELECTROCHEM; JOURNAL OF ELECTROANALYTICAL CHEMISTRY AND INTERFACIAL ELECTROCHEMISTRY JUN 11 1990, vol. 285, no. 1-2, 11 juin 1990 (1990-06-11), pages 223-240, XP002473813
- SAMEC Z ET AL: "A generalised model for dynamic photocurrent responses at dye-sensitised liquidliquid interfaces" JOURNAL OF ELECTROANALYTICAL CHEMISTRY AND INTERFACIAL ELECTROCHEMISTRY, ELSEVIER, AMSTERDAM, NL, vol. 577, no. 2, 1 avril 2005 (2005-04-01), pages 323-337, XP004786539 ISSN: 0022-0728
- E. FRANKLIN, A. BLAKERS, K. WEBER, V. EVERETT, P. DEENAPANRAY: "Towards a Simplified 20% Efficient Sliver Cell" IEEE 4TH WORLD CONFERENCE ON PHOTOVOLTAIC ENERGY CONVERSION, mai 2006 (2006-05), XP002473814

## Description

### DOMAINE TECHNIQUE

L'invention concerne le domaine des cellules photovoltaïques, et plus particulièrement celui des cellules photovoltaïques de faibles dimensions, destinées à des applications demandant une faible source d'énergie, par exemple embarquées sur des dispositifs nomades (téléphones portables, lecteur multimédia, etc...).

### ÉTAT DE LA TECHNIQUE ANTÉRIEURE

Il est connu de réaliser une cellule photovoltaïque comportant une première électrode sur laquelle est empilée une première couche à base d'un semi-conducteur de type N, par exemple du silicium, une seconde couche à base de semi-conducteur de type P et une seconde électrode, formant ainsi une jonction PN disposée entre deux électrodes. Les électrodes permettent de récolter le courant créé par la jonction PN en recevant des photons d'une lumière incidente.

Les cellules de Grätzel sont des cellules photovoltaïques de type organique. Ce sont des cellules photovoltaïques nanocristallines comportant des particules accepteurs d'électrons de dioxyde de titane recouvertes d'un colorant photosensible, appelé « sensibilisateur », sous la forme d'une couche mono-moléculaire. Ces particules sont disposées dans une solution électrolytique, ou liquide solvant, jouant le rôle de transporteur de trous. Lorsqu'un rayon lumineux atteint le colorant d'une particule de dioxyde de titane, un électron est éjecté par cette particule. Tous les électrons ainsi libérés traversent l'oxyde et, grâce à la percolation des particules de dioxyde de titane, sont collectés au bord de la cellule par des contacts en face avant et arrière, et sont ensuite dirigés vers un circuit externe. Dans une variante, la solution électrolytique peut être remplacée par un polymère solide.

De telles cellules ont notamment pour inconvénients d'offrir un rendement assez faible (de l'ordre de 4 %) lorsqu'elles sont à base de polymère solide, et de présenter une certaine instabilité lorsque les particules de dioxyde de titane sont disposées dans une solution électrolytique, due à la dégradation et à l'évaporation de la solution organique. Enfin, une telle cellule a pour inconvénients de ne comporter qu'une seule face transparente pour collecter la lumière, et que l'électrode se trouvant au niveau de cette face transparente est réalisée à base d'un matériau généralement coûteux et/ou de faible conductivité électrique.

Le document de KOTOV N.A. et al., « Photoelectrochemical effect at the interface of immiscible electrolyte solutions », Journal of Electroanalytical Chemistry and Interfacial Electrochemistry, vol. 285, n° 1-2, pages 223-240, 11 juin 1990, décrit un dispositif photovoltaïque dans lequel deux électrolytes non miscibles sont utilisés pour générer un photocourant.

Le document de SAMEC Z. et al., « A generalised model for dynamic photocurrent responses at dye-sensitised liquid/liquid interfaces », Journal of Electroanalytical Chemistry and Interfacial Electrochemistry, vol. 577, n° 2, pages 323-337, 1er avril 2005, décrit une cellule électrochimique de mesure de photocourants comprenant deux solutions électrolytiques non miscibles réparties dans plusieurs compartiments de la cellule.

Le document LV 12930 B décrit un dispositif de conversion d'énergie thermique en énergie électrique comprenant deux électrolytes non miscibles.

Le document de FRANKLIN E. et al., « Towards a simplified 20% efficiente silver cell », IEEE 4th World Conference on Photovoltaic Energy Conversion, mai 2006, décrit la réalisation de cellules photovoltaïques par gravure dans un substrat de silicium monocristallin.

### EXPOSÉ DE L'INVENTION

Un but de la présente invention est de proposer une nouvelle architecture de cellule photovoltaïque offrant une plus grande transparence, une construction robuste, et cela avec un faible coût de production.

Pour cela, la présente invention propose une cellule photovoltaïque comportant au moins :
- une enceinte fermée comprenant deux parois d'extrémité disposées l'une en face de l'autre, au moins l'une étant destinée à recevoir un rayonnement lumineux incident, et comprenant au moins une paroi latérale formée par au moins un empilement d'une première électrode et d'une seconde électrode isolées électriquement l'une de l'autre,
- au moins deux électrolytes non miscibles disposés dans l'enceinte fermée, formant deux couches superposées dont l'une est en contact avec la première électrode et l'autre est en contact avec la seconde électrode,
- des moyens, disposés dans l'enceinte fermée, aptes à réaliser une conversion photovoltaïque de l'énergie du rayonnement lumineux reçu.

On entend par électrolyte, ici et dans tout le reste du document, un milieu conducteur ionique. Les électrolytes peuvent notamment être des solutions électrolytiques.

Selon l'invention, contrairement aux dispositifs de l'art antérieur, on collecte des charges latéralement au rayonnement incident grâce aux électrodes formant la paroi latérale de l'enceinte.

La cellule selon l'invention offre également une plus grande flexibilité d'intégration car elle s'affranchit des problèmes d'ombrage liés aux métallisations, sans faire appel à des conducteurs transparents ou des métallisations fines. Il est donc possible d'utiliser des électrodes non transparentes pour former la paroi latérale de l'enceinte, autorisant l'utilisation de matériaux conventionnels peu coûteux et offrant une meilleure conductivité.

De plus, la structure de cette cellule photovoltaïque offre une grande robustesse due à l'absence de partie mobile.

Enfin, la structure de la cellule photovoltaïque selon l'invention permet de réaliser une bonne collection des charges électriques du photocourant généré.

La cellule peut être de forme sensiblement cylindrique, ou cubique, ou triangulaire, ou d'une toute autre forme. La cellule peut être de forme prismatique.

La première électrode et/ou la seconde électrode et/ou la paroi latérale de l'enceinte peuvent être de forme sensiblement annulaire ou polygonale.

La cellule peut comporter en outre un premier substrat disposé contre la première électrode et formant une des deux parois d'extrémité de l'enceinte et/ou un second substrat disposé sur la seconde électrode formant l'autre des deux parois d'extrémité de l'enceinte.

Le premier substrat et/ou le second substrat peuvent être à base de verre et/ou de polymère.

Un des deux électrolytes peut être de type aqueux et l'autre des deux électrolytes peut être de type organique.

Un des deux électrolytes peut être de type polaire et l'autre des deux électrolytes peut être de type apolaire.

Un des deux électrolytes peut être de type hydrophobe et l'autre des deux électrolytes peut être de type hydrophile.

L'isolation entre les deux électrodes peut être réalisée par au moins une portion de matériau diélectrique.

Au moins l'un des deux électrolytes peut être à base d'un liquide ionique. L'utilisation d'un ou de deux liquides ioniques dans la cellule photovoltaïque permet d'élargir la plage de températures de fonctionnement de la cellule (par exemple comprise entre environ 0°C et 200°C).

Les moyens aptes à réaliser la conversion photovoltaïque peuvent comporter au moins des couples redox, accepteurs ou donneurs d'électrons, et des molécules photosensibles, respectivement donneurs ou accepteurs d'électrons, les couples redox pouvant être disposés dans un des deux électrolytes, les molécules photosensibles pouvant être disposées dans l'autre des deux électrolytes.

Selon la molécule photosensible utilisée, il est possible d'obtenir une cellule photovoltaïque à large spectre d'absorption.

Dans une variante, les moyens aptes à réaliser la conversion photovoltaïque peuvent comporter au moins une couche photo-active déposée à l'interface entre les deux électrolytes. Cette couche photo-active est apte à induire un photo-courant lorsque cette couche reçoit le rayonnement lumineux incident.

La couche photo-active peut être obtenue par électrodéposition.

La couche photo-active peut comporter une hétérojonction à base d'au moins un semi-conducteur donneur d'électrons de type polymère et d'au moins un semi-conducteur accepteur d'électrons.

Dans une variante, la couche photo-active peut comporter une homojonction formée par au moins deux couches, à base d'au moins un semi-conducteur, de dopage différent.

La première électrode et/ou la seconde électrode peuvent être recouvertes partiellement par au moins un matériau diélectrique.

La première électrode et/ou la seconde électrode et/ou la portion de matériau diélectrique et/ou, lorsque la cellule comporte un premier substrat et/ou un second substrat, le premier substrat et/ou le second substrat peuvent être à base d'au moins un matériau de type hydrophobe ou hydrophile, ou comporter un traitement de surface de type hydrophobe ou hydrophile.

La présente invention concerne également un procédé de réalisation d'une cellule photovoltaïque, comportant au moins les étapes suivantes :
- réalisation d'un empilement d'une première électrode et d'une seconde électrode isolées électriquement l'une de l'autre, formant au moins une paroi latérale d'une enceinte, sur une première paroi d'extrémité de l'enceinte,
- réalisation d'une seconde paroi d'extrémité en face de la première paroi d'extrémité, fermant l'enceinte, au moins l'une des deux parois d'extrémité étant destinée à recevoir un rayonnement lumineux,
le procédé comportant en outre un dépôt d'au moins deux électrolytes non miscibles dans l'enceinte, formant deux couches superposées dont l'une est en contact avec la première électrode et l'autre est en contact avec la seconde électrode, et un dépôt, dans l'enceinte, de moyens aptes à réaliser une conversion photovoltaïque de l'énergie du rayonnement lumineux reçu.

Le dépôt des deux électrolytes peut être réalisé par une étape d'injection des deux électrolytes mise en oeuvre après l'étape de réalisation de la seconde paroi d'extrémité par l'intermédiaire d'un perçage réalisé dans l'enceinte après l'étape de réalisation de la seconde paroi d'extrémité ou d'un usinage préalablement réalisé dans une des parois d'extrémité.

Dans une variante, le dépôt des deux électrolytes peut être réalisé entre l'étape de réalisation de l'empilement et l'étape de réalisation de la seconde paroi d'extrémité. Ainsi, les électrolytes sont déposés dans l'enceinte avant que celle-ci ne soit fermée.

Les moyens aptes à réaliser la conversion photovoltaïque peuvent comporter au moins des couples redox accepteurs ou donneurs d'électrons et des molécules photosensibles respectivement donneurs ou accepteurs d'électrons, les couples redox pouvant être disposés dans un des deux électrolytes, les molécules photosensibles pouvant être disposées dans l'autre des deux électrolytes, le dépôt des moyens aptes à réaliser une conversion photovoltaïque pouvant être réalisé par l'étape de dépôt des électrolytes dans l'enceinte.

Les moyens aptes à réaliser la conversion photovoltaïque peuvent comporter au moins une couche photo-active déposée à l'interface, par exemple par électrodéposition, entre les deux électrolytes après le dépôt des deux électrolytes dans l'enceinte.

L'empilement de la première électrode et de la seconde électrode peut être réalisé sur un premier substrat formant la première paroi d'extrémité de l'enceinte.

La seconde paroi d'extrémité peut être obtenue par la réalisation d'un second substrat sur la seconde électrode.

Le procédé peut comporter en outre, durant l'étape de réalisation de l'empilement, une étape de recouvrement partiel de la première électrode et/ou de la seconde électrode par au moins un matériau diélectrique.

Enfin, le procédé peut comporter en outre au moins une étape de traitement hydrophobe ou hydrophile des matériaux de la première électrode et/ou de la seconde électrode et/ou, lorsque la cellule comporte un premier substrat et/ou un second substrat, du premier substrat et/ou du second substrat.

La première électrode et/ou la seconde électrode peuvent être disposées en périphérie du premier/second substrat.

### BRÈVE DESCRIPTION DES DESSINS

La présente invention sera mieux comprise à la lecture de la description d'exemples de réalisation donnés à titre purement indicatif et nullement limitatif en faisant référence aux dessins annexés sur lesquels :
- la figure 1 est une vue en coupe d'une cellule photovoltaïque à électrolytes non miscibles selon un premier mode de réalisation de la présente invention,
- la figure 2 est une vue en coupe d'une cellule photovoltaïque à électrolytes non miscibles selon un second mode de réalisation de la présente invention.

Des parties identiques, similaires ou équivalentes des différentes figures décrites ci-après portent les mêmes références numériques de façon à faciliter le passage d'une figure à l'autre.

Les différentes parties représentées sur les figures ne le sont pas nécessairement selon une échelle uniforme, pour rendre les figures plus lisibles.

Les différentes possibilités (variantes et modes de réalisation) doivent être comprises comme n'étant pas exclusives les unes des autres et peuvent se combiner entre elles.

### EXPOSÉ DÉTAILLÉ DE MODES DE RÉALISATION PARTICULIERS

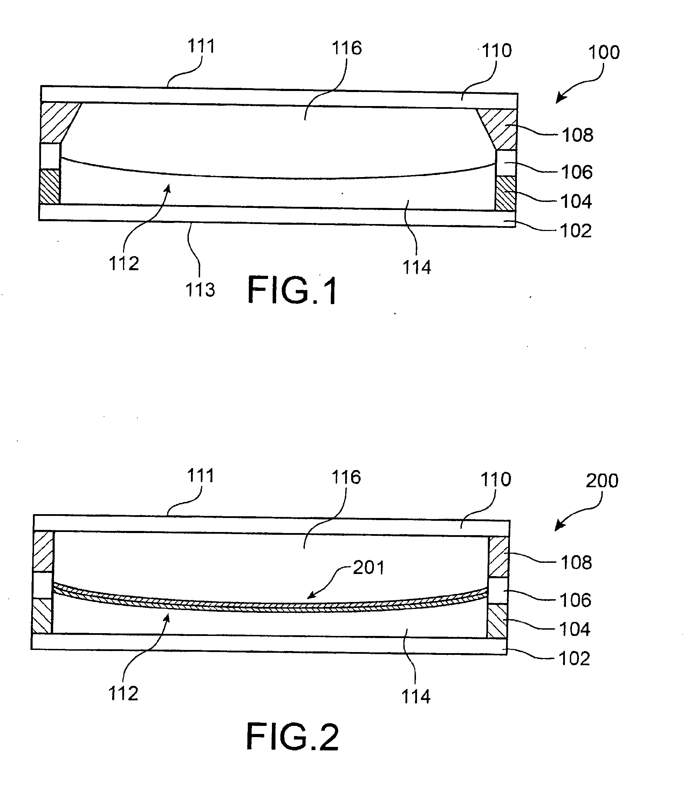

On se réfère tout d'abord à la figure 1 qui représente une vue en coupe d'une cellule photovoltaïque 100 à électrolytes non miscibles selon un premier mode de réalisation.

La cellule photovoltaïque 100, qui est ici de forme sensiblement cylindrique, comporte un premier substrat 102, par exemple à base de verre et/ou de polymère. Sur la figure 1, le substrat 102 est de forme sensiblement cylindrique.

Une première électrode 104 à base de métal, est disposée sur le premier substrat 102. Cette première électrode 104, par exemple à base d'argent et/ou de tout autre métal compatible avec un contact avec un électrolyte, est ici de forme annulaire et est disposée en périphérie du premier substrat 102. De plus, dans ce premier mode de réalisation, la première électrode 104 est continue sur toute la périphérie du premier substrat 102, c'est-à-dire formée d'une seule portion du matériau métallique de cette électrode 104.

Dans une variante, la première électrode 104 peut ne pas être continue, c'est-à-dire formée de plusieurs portions de matériau métallique réparties en périphérie du premier substrat 102 et reliées électriquement entre elles. Des portions de matériau diélectriques sont alors disposées entre les portions métalliques de cette première électrode 104.

La cellule photovoltaïque 100 comporte également une portion diélectrique 106 de forme sensiblement annulaire, disposée sur la première électrode 104, sur laquelle repose une seconde électrode 108, également de forme sensiblement annulaire et pouvant être à base d'un matériau similaire à celui utilisé pour la réalisation de la première électrode 104. La portion diélectrique 106 permet donc d'isoler électriquement les deux électrodes 104, 108 l'une de l'autre.

Dans ce premier mode de réalisation, la première électrode 104 et la portion diélectrique 106 ont chacune un profil de forme rectangulaire. Dans une variante, il est possible que ces profils soient de forme différente (trapézoïdale, triangulaire, ...). Sur la figure 1, la seconde électrode 108 a un profil de forme trapézoïdale mais dans une variante, la forme de ce profil peut être différente.

La cellule photovoltaïque 100 comporte enfin un second substrat 110, par exemple similaire au premier substrat 102, disposé sur la seconde électrode 108. Ainsi, une enceinte fermée 112 est réalisée dans la cellule 100, comportant une première paroi d'extrémité formée par le premier substrat 102, une paroi latérale formée par les première et seconde électrodes 104, 108 et le matériau diélectrique 106, et une seconde paroi d'extrémité formant couvercle obtenue par le second substrat 110.

Le premier substrat 102 et/ou le second substrat 110 peuvent être transparents, selon que la cellule photovoltaïque 100 soit éclairée d'un seul côté ou des deux côtés opposés formés par les deux substrats 102, 110. Sur l'exemple de la figure 1, la cellule 100 est éclairée sur les faces 111 et 113.

Deux électrolytes non miscibles 114 et 116 sont disposés dans l'enceinte 112. Ces deux électrolytes 114 et 116 peuvent être obtenus par dissolution ou fusion d'un soluté tel qu'un sel, un acide ou une base, dans un solvant polaire ou apolaire (eau, solvant organique ou liquide ionique).

Dans le premier mode de réalisation décrit ici, un premier des deux électrolytes 114 est une solution électrolytique aqueuse et un second des deux électrolytes 116 est une solution électrolytique organique. Ces deux électrolytes 114, 116 peuvent être placés dans l'enceinte 112 durant sa réalisation, par exemple avant que le second substrat 110 ne soit disposé sur la seconde électrode 108 pour fermer l'enceinte 112. Ils peuvent également être placés dans l'enceinte 112 après sa réalisation, c'est-à-dire après que l'enceinte 112 soit fermée par le second substrat 110, en les injectant dans l'enceinte 112 par exemple avec une seringue réalisant un perçage dans l'enceinte 112 ou par l'intermédiaire d'un usinage préalablement réalisé dans le premier substrat 102 ou le second substrat 110. De manière générale, la cellule photovoltaïque 100 est réalisée par un assemblage des différents éléments la constituant.

L'électrolyte aqueux 114 est disposé au fond de l'enceinte 112, contre le premier substrat transparent 102, jusqu'au niveau de la portion annulaire diélectrique 106. Ainsi, la portion de matériau diélectrique 106 permet que l'électrolyte aqueux 114 ne soit en contact qu'avec une seule électrode 104, et ainsi ne pas court-circuiter la seconde électrode 108. L'électrolyte organique 116 est déposé sur l'électrolyte aqueux 114, remplissant ainsi l'enceinte 112. Les deux électrolytes 114, 116 étant non miscibles, l'électrolyte organique 116 n'est en contact qu'avec une seule des deux électrodes 108, le matériau diélectrique 106, de part son épaisseur, empêchant l'électrolyte organique 116 de court-circuiter la première électrode 104. Ainsi, les épaisseurs des électrodes 104, 108 et celle du matériau diélectrique 106 sont choisies telles que les électrolytes 114 et 116 ne réalisent aucun court-circuit dans la cellule photovoltaïque 100.

L'électrolyte organique 116 est ici de type apolaire, c'est-à-dire est formé de composés apolaires ne comportant pas de charges électriques positives ou négatives, ou de faible polarité, c'est-à-dire composé d'un solvant dont la force éluante est par exemple comprise entre environ 0,01 et 0,5. L'électrolyte organique 116 est donc ici hydrophobe. Par opposition à l'électrolyte organique 116, l'électrolyte aqueux 114 est de type polaire et a donc un caractère hydrophile.

Les rayons lumineux, qui entrent par le premier substrat 102 et/ou le second substrat 110, induisent un photocourant entre les deux électrodes 104 et 108.

Ce photocourant est obtenu par un transfert d'électrons hétérogènes, c'est-à-dire un transfert d'électrons entre deux phases non miscibles, au niveau de l'interface liquide-liquide formée par les deux électrolytes 114 et 116, entre l'un des deux électrolytes, contenant des molécules photosensibles accepteurs ou donneurs d'électrons, et l'autre des deux électrolytes, contenant des couples redox respectivement donneurs ou accepteurs d'électrons. Le caractère donneur ou accepteur d'électrons des couples redox et des molécules photosensibles est déterminé en fonction du rapport entre le potentiel d'oxydo-réduction des couples redox et les niveaux d'énergie des molécules photosensibles. Dans le cas d'un couple redox accepteur d'électrons, on a par exemple E_{NHE}TCNQ/TCNQ = 0,05 V, et dans le cas d'un couple redox donneur d'électrons, on a par exemple E_{NHE}DFCET⁺/DFCET = 0,31 V en présence de molécules ZnTPPC⁴⁻.

Dans le cas d'un électrolyte aqueux 114 comportant des molécules photosensibles hydrophiles donneurs d'électrons et d'un électrolyte organique 116 comportant des couples redox hydrophobes accepteurs d'électrons, les photons reçus par la cellule 100 initient un transfert d'électrons des molécules photosensibles aux couples redox. Les électrons sont ensuite collectés au niveau de la seconde électrode 108, créant ainsi un courant entre les première et seconde électrodes 104 et 108. Ce photo-courant est inversé lorsque l'électrolyte aqueux 114 comporte des molécules photosensibles accepteurs d'électrons et lorsque l'électrolyte organique 116 comporte des couples redox donneurs d'électrons.

Les composés photosensibles présents dans l'électrolyte aqueux 114 peuvent être par exemple à base de :
- zinc tetrakis(carboxyphenyle)porphyrine ZnTPPC,
- cationique Ni-5,10,15,20-tetrakis(4-N-methylapyridiniumyle)porphyrine (Ni(TMpy-P4)),
- cuivre (II) tetrakis(p-sulfonatophenyle) deporphyrine (Cu^{II}TSPP) et cuivre(II) tetrakis (4-N-methylpyridyle)porphyrine (Cu^{II}(TMpy-P4)),
- toutes autres molécules photosensibles solubles en solution aqueuse.

La solution organique 116 peut comporter l'un au moins des composés suivants :
- 1,2-dichloroéthane (DCE),
- Acétonitrile,
- Toluène,
- Hexane.

Dans ce cas, le ou les composés précédents sont mélangés à un soluté tel que par exemple du bis (triphenylphosphanylidène) ammonium tetrakis (4-chlorophenyle)borate, ou BTPPATPBCI.

Enfin, les couples redox suivants peuvent par exemple être utilisés dans l'électrolyte organique 116 et servir de donneur ou d'accepteur d'électrons :
- TCNQ = 7,7',8,8'-tétra-cyano-quino-diméthane (accepteur d'électrons),
- DFCET = 1,2-diferrocenylethane (donneur d'électrons),
- tout macrocycle de type polymétallocène comprenant des cycles constitués d'alternance de chaînes aromatiques et alkylènes. Ces cycles induisent des transitions dans des complexes métalliques ou des groupements métalocènyle. Ce sont des molécules redox hydrophobes qui peuvent servir de molécules intermédiaires dans le transfert d'électrons ou de catalyseurs redox.

Dans une variante, il est possible que l'électrolyte aqueux 114 comporte des couples redox hydrophiles donneurs ou accepteurs d'électrons, et que l'électrolyte organique 116 comporte des molécules photosensibles respectivement accepteurs ou donneurs d'électrons. Dans ce cas, les photons reçus dans la cellule 100 initient un transfert d'électrons de la solution organique 116 vers la solution aqueuse 114. Les électrons sont alors collectés au niveau de la première électrode 104.

La différence de potentiel créée entre les deux électrodes 104, 108 modifie le rayon de courbure à l'interface liquide-liquide formé par les deux électrolytes 114 et 116. Ainsi, les électrodes 104, 108 ainsi que le matériau diélectrique 106 doivent être dimensionnés, au niveau de leur épaisseur, pour que cette modification du rayon de courbure n'entraîne pas de court-circuit entre les deux électrodes 104, 108.

Une cellule photovoltaïque 100 telle que décrite précédemment, comportant une surface active (surface des électrolytes exposée aux rayonnements lumineux) par exemple égale à environ 1,54 cm² permet de produire un courant photo-induit égal à environ 10 µA/cm².

Dans une variante du premier mode de réalisation décrit, la première et/ou la seconde électrode 104, 108 peuvent être recouvertes partiellement d'une couche diélectrique, formée par exemple par dépôt ou par traitement de surface. Des traitements hydrophobes et/ou hydrophiles peuvent également être réalisés sur les différents éléments de la cellule 100, c'est-à-dire les substrats 102, 110 et/ou les électrodes 104, 108 et/ou la portion de matériau diélectrique 106.

Dans une autre variante, l'électrolyte aqueuse 114 et/ou l'électrolyte organique 116 peuvent être chacun un liquide ionique polaire ou apolaire. Par exemple, l'électrolyte 114 peut être un liquide ionique hydrophile, par exemple du 1-butyl-1-methylpyrrolidinium bis (trifluoro-methylsulfonyle) amide ([BMP]Tf2N). L'électrolyte 116 peut être par exemple un liquide ionique hydrophobe permettant un bon transport des charges, tel que :
- un liquide ionique basé sur des anions hydrophobes comme le tri-fluoromethanesulfonate (CF₃SO₃⁻), bis- (trifluoromethanesulfonyl) imide [(CF₃SO₂)₂N⁻] et tris- (trifluoromethanesulfonyl) methide [(CF₃SO₂)₃C⁻],
- ZnCl₂/[EMIm] Cl, [EMIm] BF₄, [BMIm] BF₄, [BMIm] PF₆, [BMP] Tf₂N, [BMIm] Tf₂N and Choline chloride-MCl,
- liquide ionique [bm/m]⁺ I⁻.

L'utilisation de liquides ioniques permet ici d'augmenter la plage de température de fonctionnement possible de la cellule. Ainsi, une telle cellule photovoltaïque à liquides ioniques peut fonctionner à des températures comprises entre environ 0°C et 200°C.

Dans le cas de solutions électrolytiques 114 et 116 à base de liquides ioniques, le couple redox I⁻/I³⁻ peut être utilisé dans l'un ou l'autre des électrolytes.

La figure 2 représente une vue en coupe d'une cellule photovoltaïque à électrolytes non miscibles 200 selon un second mode de réalisation.

Par rapport à la cellule photovoltaïque 100 selon le premier mode de réalisation, la seconde électrode 108 a ici un profil de forme rectangulaire. Mais cette électrode peut également avoir un profil de forme trapézoïdale. De plus, la cellule photovoltaïque 200 comporte une couche photo-active 201 déposée à l'interface entre les deux électrolytes 114, 116, réalisée par exemple par dépôt électrochimique en polarisant les deux électrodes 104 et 108 de la cellule 200. Cette électrodéposition est réalisée par l'intermédiaire de précurseurs se trouvant dans l'un des deux électrolytes, en appliquant une différence de potentiels entre les électrodes 104 et 108.

Cette couche photo-active 201 peut par exemple être soit une hétérojonction semi-conducteur de type polymère donneur d'électrons / semi-conducteur accepteur d'électrons, soit à base d'au moins un semi-conducteur comportant des propriétés photovoltaïques (par exemple à base de Si, et/ou de Ge, et/ou de GaAs, et/ou de ZnTe, et/ou de ZnO), par exemple deux couches de dopage différent formant une homojonction. Dans le cas d'une homojonction, des précurseurs sont ajoutés par injection au cours de l'électrodéposition pour changer le dopage du matériau électrodéposé.

## Revendications

1. Cellule photovoltaïque (100, 200) comportant au moins :
- une enceinte (112) fermée comprenant deux parois d'extrémité disposées l'une en face de l'autre, au moins l'une étant destinée à recevoir un rayonnement lumineux incident ;
- au moins deux électrolytes (114, 116) non miscibles disposés dans l'enceinte (112) fermée, formant deux couches superposées dont l'une (114) est en contact avec une première électrode (104) et l'autre (116) est en contact avec une seconde électrode (108) ;
- des moyens, disposés dans l'enceinte (112) fermée, aptes à réaliser une conversion photovoltaïque de l'énergie du rayonnement lumineux reçu ;
**caractérisée en ce que** l'enceinte (112) fermée comprend au moins une paroi latérale formée par au moins un empilement de la première électrode (104) et de la seconde électrode (108) isolées électriquement l'une de l'autre.

2. Cellule (100, 200) selon la revendication 1, la cellule (100, 200) étant de forme sensiblement cylindrique ou prismatique, et la paroi latérale étant respectivement de forme sensiblement annulaire ou polygonale.

3. Cellule (100, 200) selon l'une des revendications précédentes, comportant en outre un premier substrat (102) disposé contre la première électrode (104) et formant une des deux parois d'extrémité de l'enceinte (112) et/ou un second substrat (110) disposé sur la seconde électrode (108) formant l'autre des deux parois d'extrémité de l'enceinte (112).

4. Cellule (100, 200) selon la revendication 3, le premier substrat (102) et/ou le second substrat (110) étant à base de verre et/ou de polymère.

5. Cellule (100, 200) selon l'une des revendications précédentes, un des deux électrolytes (114) étant de type aqueux et l'autre des deux électrolytes (116) étant de type organique.

6. Cellule (100, 200) selon l'une des revendications précédentes, un des deux électrolytes (114) étant de type polaire et l'autre des deux électrolytes (116) étant de type apolaire.

7. Cellule (100, 200) selon l'une des revendications précédentes, au moins l'un des deux électrolytes (114, 116) étant à base d'un liquide ionique.

8. Cellule (100) selon l'une des revendications précédentes, les moyens aptes à réaliser la conversion photovoltaïque comportant au moins des couples redox, accepteurs ou donneurs d'électrons, et des molécules photosensibles, respectivement donneurs ou accepteurs d'électrons, les couples redox étant disposés dans un des deux électrolytes (116), les molécules photosensibles étant disposées dans l'autre des deux électrolytes (114).

9. Cellule (200) selon l'une des revendications 1 à 7, les moyens aptes à réaliser la conversion photovoltaïque comportant au moins une couche photo-active (201) déposée à l'interface entre les deux électrolytes (114, 116).

10. Cellule (200) selon la revendication 9, la couche photo-active (201) comportant une hétérojonction à base d'au moins un semi-conducteur donneur d'électrons de type polymère et d'au moins un semi-conducteur accepteur d'électrons.

11. Cellule (200) selon la revendication 9, la couche photo-active (201) comportant une jonction formée par au moins deux couches à base d'au moins un semi-conducteur, de dopage différent.

12. Cellule (100, 200) selon l'une des revendications précédentes, la première électrode (104) et/ou la seconde électrode (108) étant recouvertes partiellement par au moins un matériau diélectrique.

13. Cellule (100, 200) selon l'une des revendications précédentes, la première électrode (104) et/ou la seconde électrode (108) et/ou, lorsque la cellule (100, 200) comporte un premier substrat (102) et/ou un second substrat (110), le premier substrat (102) et/ou le second substrat (110) étant à base d'au moins un matériau de type hydrophobe ou hydrophile ou comporter un traitement de surface de type hydrophobe ou hydrophile.

14. Procédé de réalisation d'une cellule photovoltaïque (100, 200), comportant au moins les étapes suivantes :
- réalisation d'un empilement d'une première électrode (104) et d'une seconde électrode (108) isolées électriquement l'une de l'autre, formant au moins une paroi latérale d'une enceinte (112), sur une première paroi d'extrémité de l'enceinte (112) ;
- réalisation d'une seconde paroi d'extrémité en face de la première paroi d'extrémité, fermant l'enceinte (112), au moins l'une des deux parois d'extrémité étant destinée à recevoir un rayonnement lumineux ; **caracterisée en ce que**
le procédé comportant en outre un dépôt d'au moins deux électrolytes (114, 116) non miscibles dans l'enceinte (112), formant deux couches superposées dont l'une (114) est en contact avec la première électrode (104) et l'autre (116) est en contact avec la seconde électrode (108), et un dépôt, dans l'enceinte (112), de moyens aptes à réaliser une conversion photovoltaïque de l'énergie du rayonnement lumineux reçu.

15. Procédé selon la revendication 14, le dépôt des deux électrolytes (114, 116) étant réalisé par une étape d'injection des deux électrolytes (114, 116) mise en oeuvre après l'étape de réalisation de la seconde paroi d'extrémité par l'intermédiaire d'un perçage réalisé dans l'enceinte après l'étape de réalisation de la seconde paroi d'extrémité ou d'un usinage préalablement réalisé dans une des parois d'extrémité.

16. Procédé selon la revendication 14, le dépôt des deux électrolytes (114, 116) étant réalisé entre l'étape de réalisation de l'empilement et l'étape de réalisation de la seconde paroi d'extrémité.

17. Procédé selon l'une des revendications 14 à 16, les moyens aptes à réaliser la conversion photovoltaïque comportant au moins des couples redox accepteurs ou donneurs d'électrons et des molécules photosensibles respectivement donneurs ou accepteurs d'électrons, les couples redox étant disposés dans un des deux électrolytes (116), les molécules photosensibles étant disposées dans l'autre des deux électrolytes (114), le dépôt des moyens aptes à réaliser une conversion photovoltaïque étant réalisé par l'étape de dépôt des électrolytes (114, 116) dans l'enceinte (112).

18. Procédé selon l'une des revendications 14 à 16, les moyens aptes à réaliser la conversion photovoltaïque comportant au moins une couche photo-active (201) déposée à l'interface entre les deux électrolytes (114, 116) après le dépôt des deux électrolytes (114, 116) dans l'enceinte.

19. Procédé selon l'une des revendications 14 à 18, l'empilement de la première électrode (104) et de la seconde électrode (108) étant réalisé sur un premier substrat (102) formant la première paroi d'extrémité de l'enceinte (112).

20. Procédé selon l'une des revendications 14 à 19, la seconde paroi d'extrémité étant obtenue par la réalisation d'un second substrat (110) sur la seconde électrode (108).

21. Procédé selon l'une des revendications 14 à 20, comportant en outre, durant l'étape de réalisation de l'empilement, une étape de recouvrement partiel de la première électrode (104) et/ou dé la seconde électrode (108) par au moins un matériau diélectrique.

22. Procédé selon l'une des revendications 14 à 21, comportant en outre au moins une étape de traitement hydrophobe ou hydrophile des matériaux de la première électrode (104) et/ou de la seconde électrode (108) et/ou, lorsque la cellule (100, 200) comporte un premier substrat(102) et/ou un second substrat (110), du premier substrat (102) et/ou du second substrat (110).

## Claims

1. Photovoltaic cell (100, 200) comprising at least:
- a closed chamber (112) including two end walls arranged opposite one another, with at least one being intended to receive incident light radiation;
- at least two non-miscible electrolytes (114, 116) placed in the closed chamber (112), forming two superimposed layers of which one (114) is in contact with a first electrode (104) and the other (116) is in contact with a second electrode (108);
- means, placed in the closed chamber (112), capable of achieving a photovoltaic conversion of the energy of the light radiation received;
**characterized in that** the closed chamber (112) includes at least one side wall formed by at least one stack of the first electrode (104) and of the second electrode (108) electrically insulated from one another.

2. Cell (100, 200) according to claim 1, which cell (100, 200) has a substantially cylindrical or prismatic shape, and the side wall respectively has a substantially annular or polygonal shape.

3. Cell (100, 200) according to one of the previous claims, which cell (100, 200) also comprises a first substrate (102) arranged against the first electrode (104) and forming one of the two end walls of the chamber (112) and/or a second substrate (110) arranged on the second electrode (108) forming the other of the two end walls of the chamber (112).

4. Cell (100, 200) according to claim 3, in which the first substrate (102) and/or the second substrate (110) is based on glass and/or polymer.

5. Cell (100, 200) according to one of the previous claims, in which one of the two electrolytes (114) is aqueous and the other of the two electrolytes (116) is organic.

6. Cell (100, 200) according to one of the previous claims, in which one of the two electrolytes (114) is polar and the other of the two electrolytes (116) is apolar.

7. Cell (100, 200) according to one of the previous claims, in which at least one of the two electrolytes (114, 116) is based on an ionic liquid.

8. Cell (100) according to one of the previous claims, in which the means capable of achieving the photovoltaic conversion comprise at least electron acceptor or donor redox couples, and electron donor or acceptor photosensitive molecules respectively, in which the redox couples are arranged in one of the two electrolytes (116), and the photosensitive molecules are arranged in the other of the two electrolytes (114).

9. Cell (200) according to one of claims 1 to 7, in which the means capable of achieving the photovoltaic conversion comprise at least one photoactive layer (201) deposited at the interface between the two electrolytes (114, 116).

10. Cell (200) according to claim 9, in which the photoactive layer (201) comprises a heterojunction based on at least one polymer-type electron donor semiconductor and at least one electron acceptor semiconductor.

11. Cell (200) according to claim 9, in which the photoactive layer (201) comprises a junction formed by at least two layers, based on at least one semiconductor, with a different doping.

12. Cell (100, 200) according to one of the previous claims, in which the first electrode (104) and/or the second electrode (1.08) is partially coated with at least one dielectric material.

13. Cell (100, 200) according to one of the previous claims, in which the first electrode (104) and/or the second electrode (108) and/or when the cell (100, 200) comprises a first substrate (102) and/or a second substrate (110), the first substrate (102) and/or the second substrate (110) is based on at least one hydrophobic or hydrophilic material, or comprises a hydrophobic or hydrophilic surface treatment.

14. Method for producing a photovoltaic cell (100, 200), comprising at least the following steps:
- the production of a stack of a first electrode (104) and a second electrode (108), electrically insulated from one another, forming at least one side wall of a chamber (112), on a first end wall of the chamber (112);
- the production of a second end wall opposite the first end wall, closing the chamber (112), in which at least one of the two end walls is intended to receive light radiation;
**Characterized in that** the method also comprises a deposition of at least two non-miscible electrolytes (114, 116) in the chamber (112), forming two superimposed layers, of which one (114) is in contact with the first electrode (104) and the other (116) is in contact with the second electrode (108), and a deposition, in the chamber (112), of means capable of achieving a photovoltaic conversion of the energy of the light radiation received.

15. Method according to claim 14, in which the deposition of the two electrolytes (114, 116) is performed by a step of injecting the two electrolytes (114, 116) implemented after the step of producing the second end wall by means of a piercing created in the chamber after the step of producing the second end wall or a preliminary machining performed in one of the end walls.

16. Method according to claim 14, in which the deposition of the two electrolytes (114, 116) is performed between the step of producing the stack and the step of producing the second end wall.

17. Method according to one of claims 14 to 16, in which the means capable of achieving the photovoltaic conversion comprise at least electron acceptor or donor redox couples and electron donor or acceptor photosensitive molecules respectively, in which the redox couples are arranged in one of the two electrolytes (116), the photosensitive molecules are arranged in the other of the two electrolytes (114), and the deposition of the means capable of performing a photovoltaic conversion is performed by the step of depositing the electrolytes (114, 116) in the chamber (112).

18. Method according to one of claims 14 to 16, in which the means capable of achieving the photovoltaic conversion comprise at least one photoactive layer (201) deposited at the interface between the two electrolytes (114, 116) after the deposition of the two electrolytes (114, 116) in the chamber.

19. Method according to one of claims 14 to 18, in which the stack of the first electrode (104) and the second electrode (108) is produced on a first substrate (102) forming the first end wall of the chamber (112).

20. Method according to one of claims 14 to 19, in which the second end wall is obtained by producing a second substrate (110) on the second electrode (108).

21. Method according to one of claims 14 to 20, which also comprise, during the step of producing the stack, a step of partial covering of the first electrode (104) and/or the second electrode (108) with at least one dielectric material.

22. Method according to one of claims 14 to 21, in which also comprises at least one step of hydrophobic or hydrophilic treatment of the materials of the first electrode (104) and/or the second electrode (108) and/or, when the cell (100, 200) comprises a first substrate (102) and/or a second substrate (110), of the first substrate (102) and/or the second substrate (110).

## Patentansprüche

1. Photovoltaische Zelle (100, 200) wenigstens umfassend:
- eine geschlossene Kammer (112), die zwei einander gegenüberliegende Stirnwände umfasst, wovon wenigstens eine zum Empfangen einer einfallenden Lichtstrahlung bestimmt ist;
- wenigstens zwei in der geschlossenen Kammer (112) befindliche, nicht mischbare Elektrolyte (114, 116), die zwei übereinander liegende Schichten bilden, wovon der eine (114) mit einer ersten Elektrode (104) im Kontakt steht und der andere (116) mit einer zweiten Elektrode (108) im Kontakt steht;
- in der geschlossenen Kammer (112) befindliche Mittel, die zum Durchführen einer photovoltaischen Umwandlung der Energie der empfangenen Lichtstrahlung befähigt sind;
**dadurch gekennzeichnet, dass** die geschlossene Kammer (112) wenigstens eine Seitenwand umfasst, die durch wenigstens einen Stapel aus der von einander elektrisch isolierten ersten Elektrode (104) und der zweiten Elektrode (108) gebildet wird.

2. Zelle (100, 200) gemäß Anspruch 1, wobei die Zelle (100, 200) von im Wesentlichen zylindrischer oder prismatischer Form ist und die Seitenwand jeweils im Wesentlichen ringförmig oder polygonförmig ist.

3. Zelle (100, 200) gemäß einem der vorangehenden Ansprüche, die außerdem ein erstes Substrat (102), das gegen die erste Elektrode (104) angeordnet ist und eine der beiden Stirnwände der Kammer (112) bildet, und/oder ein zweites Substrat (110) umfasst, das auf der zweiten Elektrode (108) angeordnet ist und die andere der beiden Stirnwände der Kammer (112) bindet.

4. Zelle (100, 200) gemäß Anspruch 3, wobei das erste Substrat (102) und/oder das zweite Substrat (110) auf der Grundlage von Glas und/oder Polymer besteht.

5. Zelle (100, 200) gemäß einem der vorangehenden Ansprüche, wobei einer (114) der beiden Elektrolyte vom wässrigen Typ ist und der andere (116) der beiden Elektrolyte vom organischen Typ ist.

6. Zelle (100, 200) gemäß einem der vorangehenden Ansprüche, wobei einer (114) der beiden Elektrolyte vom polaren Typ ist und der andere (116) der beiden Elektrolyte vom unpolaren Typ ist.

7. Zelle (100, 200) gemäß einem der vorangehenden Ansprüche, wobei wenigstens einer der beiden Elektrolyte (114, 116) auf der Grundlage einer ionischen Flüssigkeit besteht.

8. Zelle (100) gemäß einem der vorangehenden Ansprüche, wobei die zum Durchführen der photovoltaischen Umwandlung befähigten Mittel wenigstens Elektronen-Donor- oder Akzeptor-Redoxpaare beziehungsweise lichtempfindliche Elektronen-Donor- oder Akzeptor-Moleküle umfassen, wobei sich die Redoxpaare in einem (116) der beiden Elektrolyten befinden und sich die lichtempfindlichen Moleküle in dem anderen (114) der beiden Elektrolyte befinden.

9. Zelle (200) gemäß einem der Ansprüche 1 bis 7, wobei die zum Durchführen der photovoltaischen Umwandlung befähigten Mittel wenigstens eine photoaktive Schicht (201) umfassen, die an der Grenzfläche zwischen den beiden Elektrolyten (114, 116) angeordnet ist.

10. Zelle (200) gemäß Anspruch 9, wobei die photoaktive Schicht (201) einen Heteroübergang auf der Grundlage wenigstens eines Elektronendonor-Halbleiters vom Polymertyp und wenigstens eines Elektronenakzeptor-Halbleiters umfasst.

11. Zelle (200) gemäß Anspruch 9, wobei die photoaktive Schicht (201) einen Übergang umfasst, der durch wenigstens zwei Schichten auf der Grundlage wenigstens eines Halbleiters mit unterschiedlicher Dotierung gebildet wird.

12. Zelle (100, 200) gemäß einem der vorangehenden Ansprüche, wobei die erste Elektrode (104) und/oder die zweite Elektrode (108) teilweise mit wenigstens einem dielektrischen Material überzogen ist.

13. Zelle (100, 200) gemäß einem der vorangehenden Anspruche, wobei die erste Elektrode (104) und/oder die zweite Elektrode (108) und/oder, wenn die Zelle (100, 200) ein erstes Substrat (102) und/oder ein zweites Substrat (110) umfasst, das erste Substrat (102) und/oder das zweite Substrat (110) auf der Grundlage wenigstens eines Materials vom hydrophoben oder hydrophilen Typ besteht oder eine Oberflächenbehandlung vom hydrophoben oder hydrophilen Typ beinhaltet.

14. Verfahren zur Herstellung einer photovoltaischen Zelle (100, 200), das wenigstens die folgenden Schritte umfasst:
- Herstellung eines Stapels aus einer von einander elektrisch isolierten ersten Elektrode (104) und einer zweiten Elektrode (108), der wenigstens eine Seitenwand einer Kammer (112) bildet, auf einer ersten Stirnwand der Kammer (112);
- Herstellung einer zweiten Stirnwand gegenüber der ersten Stirnwand unter Schließen der Kammer (112), wobei wenigstens eine der beiden Stirnwände zum Empfangen einer Lichtstrahlung bestimmt ist, **dadurch gekennzeichnet, dass** das Verfahren außerdem das Einbringen wenigstens zweier nicht mischbarer Elektrolyte (114, 116) in die Kammer (112), die zwei über einander liegende Schichten bilden, wovon die eine (114) in Kontakt mit der ersten Elektrode (104) steht und die andere (116) in Kontakt mit ist der zweiten Elektrode (108) steht, und das Einbringen von Mitteln in die Kammer (112) umfasst, die zum Durchführen einer photovoltaischen Umwandlung von Energie aus der empfangenen Lichtstrahlung befähigt sind.

15. Verfahren gemäß Anspruch 14, wobei das Einbringen der beiden Elektrolyte (114, 116) durch einen Schritt des Einspritzens der beiden Elektrolyte (114, 116), der nach dem Schritt der Herstellung der zweiten Stirnwand mittels eines nach dem Schritt der Herstellung der zweiten Stirnwand ausgeführten Durchstechens ausgeführt wird, oder durch eine zuvor an einer der Stirnwände durchgeführte maschinelle Bearbeitung bewerkstelligt wird.

16. Verfahren gemäß Anspruch 14, wobei das Einbringen der beiden Elektrolyte (114, 116) zwischen dem Schritt der Herstellung des Stapels und dem Schritt der Herstellung der zweiten Stirnwand durchgeführt wird.

17. Verfahren gemäß einem der Ansprüche 14 bis 16, wobei die zum Durchführen der photovoltaischen Umwandlung befähigten Mittel wenigstens Elektronen-Donor- oder Akzeptor-Redoxpaare beziehungsweise lichtempfindliche Elektronen-Donor- oder Akzeptor-Moleküle umfassen, wobei sich die Redoxpaare in einem (116) der beiden Elektrolyte befinden und sich die lichtempfindlichen Moleküle in dem anderen (114) der beiden Elektrolyte befinden und das Einbringen der zum Durchführen der photovoltaischen Umwandlung befähigten Mittel durch den Schritt des Einbringens der Elektrolyte (114, 116) in die Kammer (112) ausgeführt wird.

18. Verfahren gemäß einem der Ansprüche 14 bis 16, wobei die zum Durchführen der photovoltaischen Umwandlung befähigten Mittel wenigstens eine photoaktive Schicht (201) umfassen, die an der Grenzfläche zwischen den beiden Elektrolyten (114, 116) nach dem Einbringen der beiden Elektrolyte (114, 116) in die Kammer aufgebracht wurde.

19. Verfahren gemäß einem der Ansprüche 14 bis 18, wobei der Stapel aus der ersten Elektrode (104) und der zweiten Elektrode (108) auf einem die erste Stirnwand der Kammer (112) bildenden ersten Substrat (102) hergestellt wird.

20. Verfahren gemäß einem der Ansprüche 14 bis 19, wobei die zweite Stirnwand durch die Herstellung eines zweiten Substrats (110) auf der zweiten Elektrode (108) erhalten wird.

21. Verfahren gemäß einem der Ansprüche 14 bis 20, das außerdem während des Schritts der Herstellung des Stapels einen Schritt des teilweisen Überziehens der ersten Elektrode (104) und/oder der zweiten Elektrode (108) mit wenigstens einem dielektrischen Material umfasst.

22. Verfahren gemäß einem der Ansprüche 14 bis 21, das außerdem wenigstens einen Schritt der hydrophoben oder hydrophilen Behandlung der Materialien der ersten Elektrode (104) und/oder der zweiten Elektrode (108) und/oder, wenn die Zelle (100, 200) ein erstes Substrat (102) und/oder ein zweites Substrat (110) umfasst, des ersten Substrats (102) und/oder des zweiten Substrats (110) umfasst.
